# FASCICULE DE BREVET EUROPEEN

(11) **EP 0 776 603 B1**
(45) Date de publication et mention de la délivrance du brevet: **22.03.2000**
(21) Numéro de dépôt: 96420335.0
(22) Date de dépôt: 25.11.1996
(51) Int. Cl.: A01J 25/12, A01J 25/11

(54) **Mouleuse-doseuse de mélange caillé-sérum**
Form- und Dosiervorrichtung für eine Buche-Molke Mischung
Moulding and metering device for a curd-whey mix

(30) Priorité: 30.11.1995 FR 9514455
(43) Date de publication de la demande: 04.06.1997
(73) Titulaire: CHALON MEGARD, 01460 Montreal la Cluse (FR)
(72) Inventeur: Caldognetto, Michel, 01130 Nantua (FR); Chabert, Gérard, 74150 Vallieres (FR)
(74) Mandataire: Bratel, Gérard

(56) Documents cités:
- FR-A- 2 578 386
- FR-A- 2 595 199
- FR-A- 2 613 583
- FR-A- 2 637 771

## Description

La présente invention se rapporte à l'industrie fromagère et elle concerne, plus particulièrement, une mouleuse-doseuse de mélange caillé-sérum, utilisable dans la fabrication des fromages à pâte pressée, à pâte semi-pressée et à pâte molle comme décrit, par exemple, dans FR-A-2 578 386.

Le moulage des fromages à pâte pressée peut s'effectuer soit dans des bacs de drainage, soit dans des mouleuses tubulaires.

Le moulage des fromages à pâte semi-pressée peut s'effectuer soit dans des tables de moulage, soit dans des mouleuses tubulaires.

Le moulage des fromages à pâte molle peut aussi s'effectuer dans des mouleuses tubulaires, à partir de cuves de fabrication fromagère de grande capacité.

Dans les mouleuses tubulaires, le mélange caillé-sérum est transféré dans des colonnes tubulaires de moulage, par exemple au moyen d'une pompe positive à lobes. Un boudin de caillé s'y forme, puis est découpé à sa base en tranches horizontales correspondant chacune à un fromage.

Ces machines, bien que performantes, présentent des inconvénients importants et ceci d'autant plus que les caillés fromagers sont plus fragiles. D'une part, lors du moulage de la première cuve, une attente importante est nécessaire avant la première découpe d'un fromage, du fait de l'obligation de former le boudin, au démarrage, ce qui demande un temps variable de 8 à 12 minutes environ. D'autre part, des pertes en fines sont engendrées par le frottement du boudin, lors de sa descente, contre les perforations des tubes de drainage. De plus, ces machines sont relativement complexes et coûteuses, et elles présentent des difficultés de nettoyage importantes.

L'invention vise à fournir une mouleuse-doseuse simplifiée et économique, permettant d'éviter les inconvénients mentionnés ci-dessus et se rapprochant le plus possible du système traditionnel, couramment utilisé en fromagerie, dans lequel le mélange caillé-sérum, puisé avec un seau dans une cuve de fabrication, était déversé directement dans des moules répartis sur une table.

A cet effet, l'invention a pour objet une mouleuse-doseuse de mélange caillé-sérum, pour la fabrication des fromages à pâte pressée, à pâte semi-pressée et à pâte molle, qui se présente comme un ensemble composé essentiellement, de haut en bas :
- d'une cuve de fromagerie située en partie supérieure, de capacité réduite mais au moins égale à celle du ou des moules et/ou d'un bloc-moule à remplir, la cuve possédant une paroi latérale pleine doublée intérieurement par une paroi verticale perforée ou micro-perforée, et un fond percé d'ouvertures en correspondance avec le ou les moules à remplir, cette cuve étant encore pourvue d'une arrivée de mélange caillé-sérum et d'un dispositif d'agitation,
- d'un couteau obturateur mobile horizontalement, disposé sous le fond de la cuve de fromagerie et percé de trous en correspondance avec les ouvertures du fond de la cuve, le couteau obturateur étant lié à des moyens d'actionnement aptes à le déplacer entre une position de fermeture et une position d'ouverture,
- d'un conformateur fixe, situé sous le couteau obturateur précité, et comprenant un ensemble de tubes perforés ou micro-perforés, d'axes verticaux, assemblés entre eux et situés en correspondance avec les ouvertures du fond de la cuve de fromagerie,
- d'un couteau obturateur inférieur mobile horizontalement, disposé à la base du conformateur et percé de trous en correspondance avec les tubes du conformateur, le couteau obturateur inférieur étant lié à des moyens d'actionnement aptes à le déplacer entre une position de fermeture et une position d'ouverture,
- d'une réhausse disposée sous le couteau obturateur inférieur et constituée d'un ensemble de tubes perforés ou micro-perforés de faible hauteur en correspondance avec les tubes du conformateur, la réhausse étant montée mobile verticalement et liée à des moyens d'actionnement aptes à la déplacer entre une position basse, et une position haute dans laquelle elle vient en appui sous le couteau obturateur inférieur, et
- sous la réhausse, d'une table élévatrice ou d'un plateau mobile verticalement, et apte à supporter un moule et/ou des moules et/ou un bloc-moule à fromage, la table ou le plateau étant lié à des moyens d'actionnement aptes à la déplacer entre une position basse, permettant la pose et l'évacuation du ou des moules et/ou du bloc-moule, et une position haute dans laquelle le ou les moules et/ou le bloc-moule sont placés en appui contre la réhausse.

La cuve de fromagerie de capacité réduite, située dans la partie supérieure de la mouleuse-doseuse, possède un dispositif d'agitation ou de brassage efficace, par exemple un dispositif à pales d'agitation rotatives autour d'axes verticaux, permettant d'obtenir une parfaite homogénéité du mélange caillé-sérum, amené depuis une cuve de fabrication extérieure. La paroi intérieure perforée ou micro-perforée de la cuve de fromagerie permet un drainage du sérum à travers cette paroi, permettant ainsi de faire varier le rapport caillé / sérum du mélange. Sur la paroi latérale pleine de la cuve de fromagerie sont avantageusement raccordés des moyens d'écoulement contrôlé du sérum, réalisables par exemple sous la forme d'un siphon à hauteur réglable, permettant l'enlèvement d'une quantité variable de sérum. De préférence, l'arrivée de mélange caillé-sérum dans la cuve de fromagerie est elle aussi à hauteur réglable, permettant de choisir entre une arrivée au-dessus du sérum ou dans celui-ci, ce qui a une influence importante sur la présence ou l'absence de trous de moulage.

L'obturateur mobile à mouvement horizontal, disposé entre le fond de la cuve de fromagerie et le sommet du conformateur, permet d'ouvrir ou de fermer à volonté le fond de la cuve, pour permettre l'arrivée de doses de mélange caillé-sérum dans les différents tubes verticaux du conformateur, sous l'effet de la gravité.

Selon un mode de réalisation préféré du conformateur, les tubes verticaux du conformateur sont tous montés entre une plaque horizontale supérieure et une plaque horizontale inférieure, reliées entre elles, sur leur étendue, par des tirants ou entretoises verticaux et assemblées, à leur périphérie, à un cadre-support solidarisé avec le bâti général de la mouleuse-doseuse. Le conformateur est ainsi solidement mis en place.

Le couteau obturateur inférieur, à mouvement horizontal, permet d'ouvrir et de fermer à volonté, à leur base, les tubes perforés ou micro-perforés du conformateur, tubes dont chacun a une capacité volumique déterminée pour obtenir une dose de mélange caillé-sérum correspondant au volume du moule situé au-dessous, dans le même axe vertical.

La réhausse réglable en hauteur, dont les tubes prolongent vers le bas les tubes du conformateur, permet en position haute de serrer le sous-ensemble constitué par ce conformateur, par le couteau obturateur inférieur et par la réhausse. On obtient ainsi, à la base du conformateur, une étanchéité efficace forçant le sérum contenu dans les tubes du conformateur à s'évacuer par les perforations ou micro-perforations de la paroi de ces tubes, en l'empêchant de s'échapper par le jeu fonctionnel entre la plaque inférieure du conformateur et le couteau obturateur inférieur, ceci pour éviter les trous de moulage.

Dans l'ensemble, comme il résulte de ce qui précède, la machine objet de l'invention agit en fait non pas comme une simple mouleuse, mais plutôt comme une doseuse volumétrique de mélange caillé-sérum. L'ouverture du couteau obturateur inférieur permet la descente par gravité de chaque quantité dosée de caillé pré-égoutté, à travers la réhausse, dans chaque moule unitaire. Selon une caractéristique importante de l'invention, toutes les ouvertures du fond de la cuve de fromagerie, située dans la partie supérieure de la doseuse-mouleuse, sont en parfaite correspondance avec les axes des moules à remplir de caillé ; ceci implique que la surface du fond de la cuve, vue en projection horizontale, contienne entièrement le ou les moules à fromage, et/ou le bloc-moule, à remplir de doses de mélange caillé-sérum.

De toute façon, l'invention sera mieux comprise à l'aide de la description qui suit, en référence au dessin schématique annexé représentant, à titre d'exemple, une forme d'exécution de cette mouleuse-doseuse de mélange caillé-sérum :
Figure 1 est une vue d'ensemble, en coupe verticale, d'une mouleuse-doseuse de mélange caillé-sérum conforme à la présente invention ;
Figure 2 est une vue en coupe horizontale de la même mouleuse-doseuse, suivant II-II de figure 1 ;
Figures 3 à 7 sont des schémas illustrant le fonctionnement de cette mouleuse-doseuse.

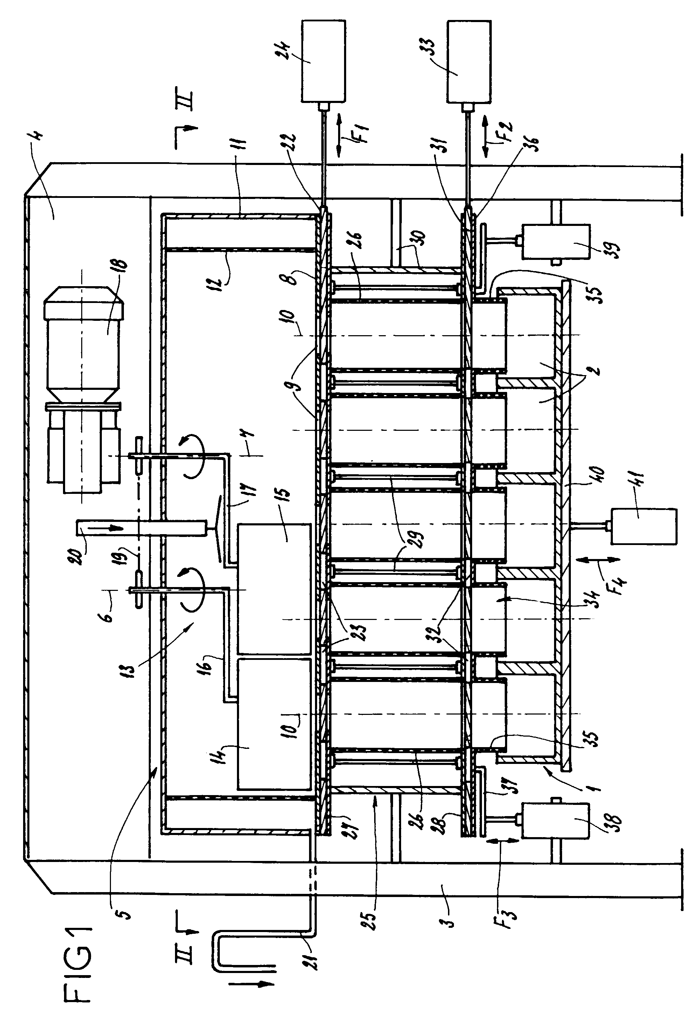

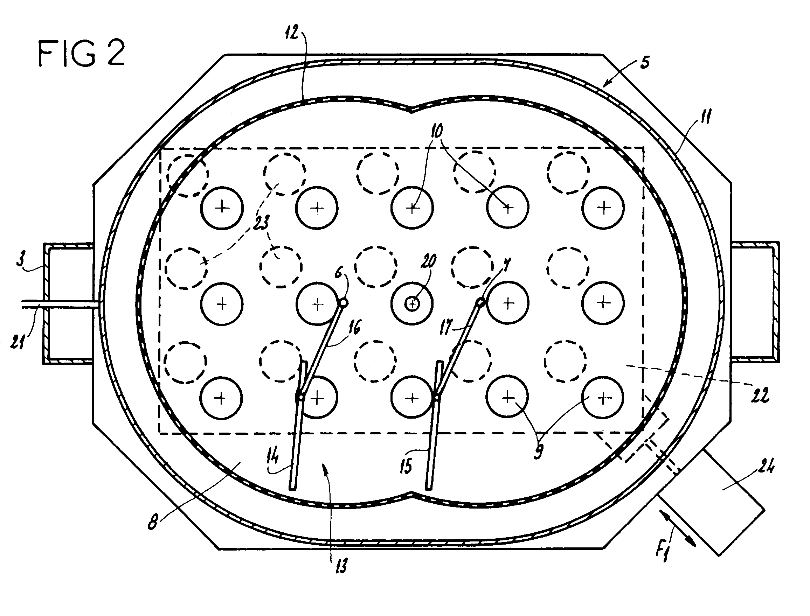

L'ensemble représenté au dessin, notamment aux figures 1 et 2, est destiné au moulage et au dosage de mélange caillé-sérum, dans la fabrication de fromages à pâte pressée, à pâte semi-pressée ou à pâte molle. Dans l'exemple illustré, la mouleuse-doseuse est prévue pour le moulage de fromages cylindriques, dans un bloc-moule 1 rassemblant quinze moules unitaires cylindriques 2, répartis en rectangle suivant trois rangées parallèles, chacune de cinq moules.

La mouleuse-doseuse comprend un bâti général 3, qui comporte notamment, dans sa partie supérieure, une poutre horizontale 4.

Sous la poutre 4 est disposée une cuve de fromagerie 5, ayant une capacité réduite, seulement légèrement supérieure à la quantité de mélange caillé-sérum correspondant au bloc-moule 1 (ou à l'ensemble des moules unitaires 2).

La cuve de fromagerie 5 possède une section horizontale du type "double O", c'est-à-dire résultant de la zone totale couverte par deux cercles égaux et sécants, dont les axes verticaux respectifs sont indiqués en 6 et 7. Comme le montre plus particulièrement la figure 2, en projection horizontale, la section rectangulaire du bloc-moule 1 s'inscrit entièrement à l'intérieur de la section de la cuve 5.

La cuve 5 possède un fond plat 8, horizontal, percé de trous 9 circulaires, en même nombre et disposition que les moules unitaires 2, les axes verticaux 10 des trous 9 coïncidant avec les axes de ces moules unitaires 2. Les trous 9 du fond 8 de la cuve 5 possèdent un diamètre légèrement inférieur au diamètre intérieur des moules unitaires 2.

La cuve 5 possède une paroi latérale pleine 11, ou paroi extérieure, doublée intérieurement par une paroi verticale 12 perforée ou micro-perforée, séparée de la paroi pleine 11 par une distance sensiblement constante sur toute la périphérie de la cuve 5, cette distance pouvant être de quelques centimètres.

A l'intérieur de la cuve 5 est placé un dispositif d'agitation performant 13, supporté par la poutre horizontale 4. Le dispositif d'agitation 13 comprend deux pales d'agitation 14 et 15, portées par des bras rotatifs respectifs 16 et 17, montés tournants respectivement autour des deux axes verticaux 6 et 7 précités. Les deux pales d'agitation 14 et 15 sont animées à partir d'un même motoréducteur 18, et par l'intermédiaire d'une transmission mécanique 19.

La cuve de fromagerie 5 comporte une arrivée centrale 20 de mélange caillé-sérum, à hauteur variable. L'arrivée centrale 20 est raccordée à une cuve de fabrication, non représentée.

Un dispositif d'écoulement à siphon 21 est raccordé à la paroi latérale pleine 11 de la cuve de fromagerie 5.

Sous le fond plat 8 de cette cuve de fromagerie 5 est disposé un premier couteau obturateur mobile 22, en forme de plaque s'étendant dans un plan horizontal, et déplaçable horizontalement dans son plan. Le couteau obturateur 22 est percé de trous circulaires 23, dont le nombre et la disposition correspondent aux trous 9 du fond 8 de la cuve 5, le diamètre des trous 23 du couteau obturateur 22 étant égal à celui des trous 9 du fond 8. Le couteau obturateur 22 est attelé à un vérin 24 à double effet, de préférence un vérin pneumatique, qui permet de le déplacer horizontalement selon une direction diagonale, comme indiqué par une flèche F1, entre une position de fermeture et une position d'ouverture.

Sous le couteau obturateur 22 est disposé un conformateur 25, constitué d'un ensemble de tubes 26, d'axes verticaux, en même nombre et disposition que les trous 9 du fond 8 de la cuve 5, et que les moules unitaires 2 du bloc-moule 1. Les tubes 26 sont montés entre une plaque horizontale supérieure 27 et une plaque horizontale inférieure 28, reliées entre elles par des tirants verticaux 29. La plaque horizontale supérieure 27 du conformateur 25 supporte le couteau obturateur 22. Chaque tube 26 du conformateur 25 possède une paroi perforée ou micro-perforée, et est disposé suivant l'un des axes verticaux 10 précédemment définis. Ce conformateur 25 est maintenu en position fixe au moyen d'un cadre-support 30, disposé à sa périphérie entre les deux plaques horizontales 27 et 28, et relié au bâti général 3.

A la base du conformateur 25 est disposé un couteau obturateur mobile inférieur 31, en forme de plaque s'étendant dans un plan horizontal. Le couteau obturateur inférieur 31 est percé de trous circulaires 32, dont le nombre et la disposition correspondent aux trous 9 du fond 8 de la cuve 5, ainsi qu'aux tubes 26 du conformateur 25. Le couteau obturateur inférieur 31 est attelé à un vérin 33 à double effet, de préférence un vérin pneumatique, qui permet de le déplacer horizontalement selon une direction diagonale, comme indiqué par une flèche F2, entre une position de fermeture et une position d'ouverture.

Sous l'obturateur mobile inférieur 31 est prévue une réhausse 34, constituée d'un ensemble de tubes 35 d'axes verticaux, de faible hauteur, en même nombre et disposition que les tubes 26 du conformateur 25. Les tubes 35 de la réhausse 34, à paroi perforée ou micro-perforée, sont fixés notamment par soudage sous une plaque horizontale 36. La périphérie de la plaque 36 est assemblée à un cadre-support 37, déplaçable verticalement sur une faible course suivant la flèche F3 au moyen de deux vérins à double effet 38 et 39, opposés l'un à l'autre et liés au bâti général 3.

Sous la réhausse 34 est disposé le bloc-moule 1, dont les différents moules unitaires 2 ont leurs axes respectifs 10 confondus avec les axes des tubes 26 du conformateur 25 et des tubes 35 de la réhausse 34. Le bloc-moule 1 repose sur une table élévatrice 40, déplaçable verticalement suivant la flèche F4 au moyen d'un vérin à double effet 41 qui permet de placer ce bloc-moule 1 en appui contre la réhausse 34.

L'ensemble des éléments décrits ci-dessus, excepté le bloc-moule 1 qui est amovible, est relié au bâti général 3 ceci essentiellement par la poutre supérieure 4 qui supporte le dispositif d'agitation 13, par le cadre-support 30 du conformateur 25, et par les fixations des différents vérins 24,33,38,39 et 41. A cet ensemble est enfin associée une armoire de commande, non représentée, destinée notamment à la commande des vérins 24,33,38,39 et 41, assurant l'actionnement des divers éléments mobiles de l'ensemble.

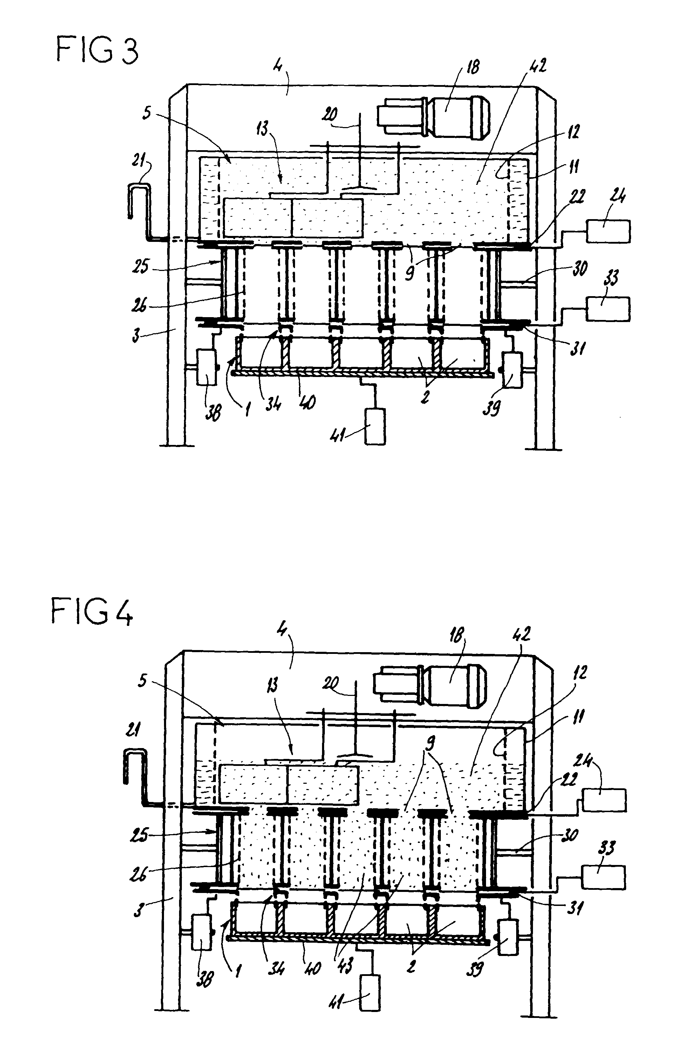

Le fonctionnement de l'ensemble précédemment décrit est illustré par les figures 3 à 7, et s'établit comme suit :

La cuve de fromagerie 5, installée en partie supérieure de la mouleuse-doseuse, est alimentée en mélange caillé-sérum, au moyen d'une pompe ou par gravité depuis la cuve de fabrication. L'entrée du mélange caillé-sérum dans la cuve 5 se fait par l'arrivée centrale 20, dont la hauteur variable permet une entrée du mélange au-dessus du sérum ou dans celui-ci, ce qui a une influence importante sur la présence ou l'absence de trous de moulage. A l'intérieur de la cuve 5, le caillé est maintenu en suspension homogène dans le sérum au moyen du dispositif d'agitation 13. Le volume de mélange-caillé sérum 42 (voir la figure 3), introduit dans la cuve 5, est légèrement supérieur à la capacité totale des moules unitaires 2 du bloc-moule 1. Le couteau obturateur 22, situé sous le fond 8 de la cuve 5, est maintenu en position fermée durant tout le remplissage de cette cuve 5 en mélange caillé-sérum.

La densité de ce mélange caillé-sérum peut être modifiée, à l'intérieur de la cuve 5, en extrayant du sérum en quantité plus ou moins importante à travers la paroi intérieure 12 perforée ou micro-perforée, ceci en faisant varier la hauteur du siphon 21. Le réglage de cette densité peut s'effectuer au moyen d'une mesure et d'un contrôle de l'intensité électrique absorbée par le moto-réducteur 18 du dispositif d'agitation 13, intensité variant en proportion du rapport caillé / sérum.

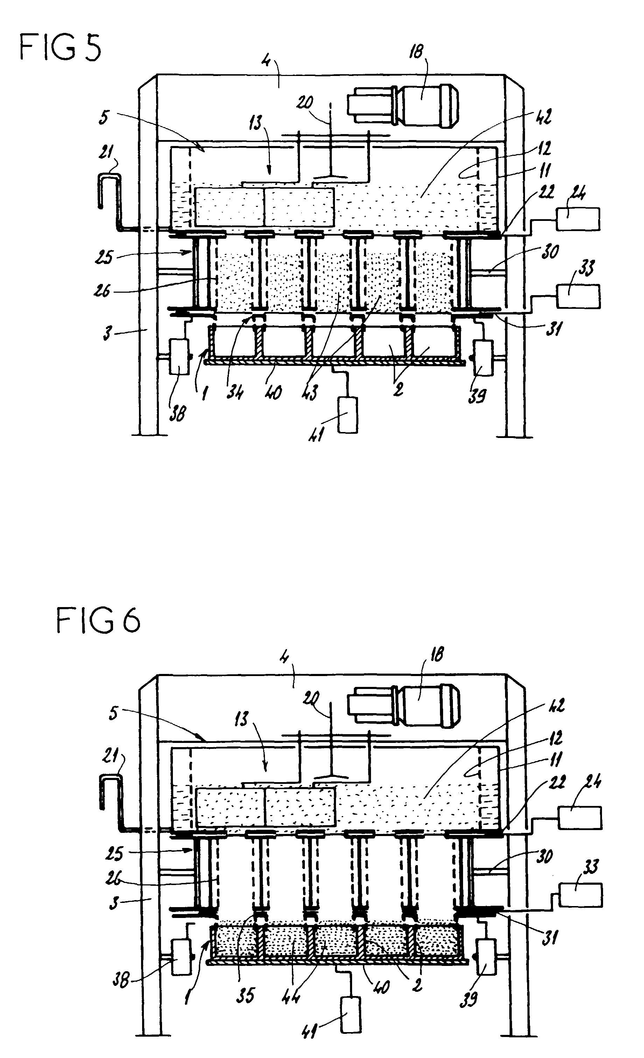

Dès que le niveau de remplissage désiré de la cuve 5 se trouve atteint, le couteau obturateur 22 est amené en position ouverte, au moyen du vérin 24. L'ouverture du couteau obturateur 22 est ainsi maintenue pendant un temps réglable, en général très court, le couteau obturateur 22 étant ensuite refermé au moyen du vérin 24. Durant le temps d'ouverture, une dose de mélange caillé-sérum 43 tombe par gravité dans chaque tube perforé ou micro-perforé 26 du conformateur 25 - voir la figure 4 (couteau obturateur 22 ouvert) et la figure 5 (couteau obturateur 22 refermé).

Au cours de l'opération précédemment décrite, le fond des tubes 26 du conformateur 25 est obturé de façon étanche par le couteau obturateur inférieur 31 maintenu en position fermée, et serré contre la plaque inférieure 28 du conformateur 25 par l'action des deux vérins 38 et 39, agissant sur la réhausse 34.

Dans cette position (figure 5), on respecte un certain temps de repos au cours duquel s'effectue un drainage du sérum de la dose de mélange 43 introduite dans chaque tube 26, le drainage étant variable en fonction du type de perforation des tubes 26 et du temps de repos.

Ensuite, après abaissement de la réhausse 34 au moyen des vérins 38 et 39, le couteau obturateur inférieur 31 est ouvert au moyen du vérin 33, pour laisser les doses de caillé pré-égoutté descendre par gravité dans chaque moule unitaire 2 du bloc-moule 1, à travers les tubes 35 de la réhausse 34. Une quantité dosée de caillé pré-égoutté 44 parvient ainsi dans chaque moule unitaire 2 - voir figure 6.

Dès ce transfert réalisé, le couteau obturateur inférieur 31 reprend sa position fermée au moyen du vérin 33, la réhausse 34 est de nouveau appuyée contre ce couteau obturateur 31 au moyen des vérins 38 et 39. Puis le couteau obturateur supérieur 22 est ouvert, et ainsi de suite...

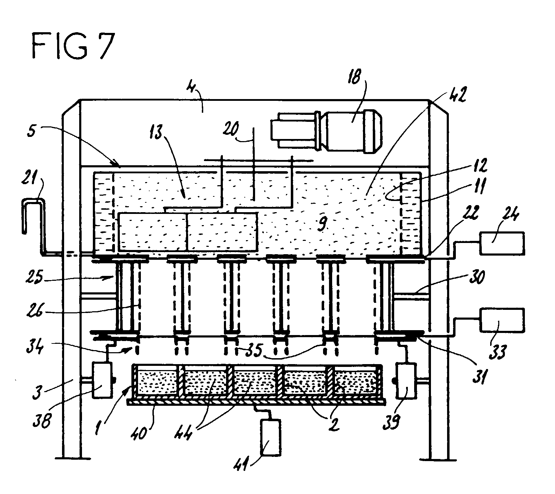

Pendant ce temps, la table élévatrice 40 descend sous l'action du vérin 41, comme montré sur la figure 7, pour permettre l'évacuation du bloc-moule 1 rempli. Un nouveau bloc-moule vide peut alors être posé sur la table élévatrice 40, puis mis en appui sous la réhausse 34 par déplacement vers le haut de la table élévatrice 40 au moyen du vérin 41, et ainsi de suite...

Comme il va de soi, l'invention ne se limite pas à la seule forme d'exécution de cette mouleuse-doseuse de mélange caillé-sérum qui a été décrite ci-dessus, à titre d'exemple ; elle en embrasse, au contraire, toutes les variantes de réalisation et d'application respectant le même principe. En particulier, l'on ne s'éloignerait pas du cadre de l'invention :
- par des modifications de détail des formes des divers éléments constitutifs, par exemple une modification de la forme de la section horizontale de la cuve 5 ;
- par le recours à tous moyens équivalents de ceux décrits, en particulier le remplacement des vérins pneumatiques par tous actionneurs appropriés, ou bien le remplacement du siphon 21 par une vanne motorisée ou par une arrivée extérieure, depuis un bac-tampon, d'une quantité plus importante de sérum, ou tout autre moyen permettant de contrôler la densité du mélange caillé-sérum à l'intérieur de la cuve 5 ;
- par une adaptation à un nombre et une disposition quelconques des moules 2 à remplir ;
- en remplaçant le bloc-moule 1 par des moules unitaires, indépendants les uns des autres.

## Revendications

1. Mouleuse-doseuse de mélange caillé-sérum, pour la fabrication des fromages à pâte pressée, à pâte semi-pressée et à pâte molle, caractérisée en ce qu'elle se présente comme un ensemble composé essentiellement, de haut en bas :
- d'une cuve de fromagerie (5) située en partie supérieure, de capacité réduite mais au moins égale à celle du ou des moules (2) et/ou d'un bloc-moule (1) à remplir, la cuve (5) possédant une paroi latérale pleine (11) doublée intérieurement par une paroi verticale (12) perforée ou micro-perforée, et un fond (8) percé d'ouvertures (9) en correspondance avec le ou les moules (2) à remplir, cette cuve (5) étant encore pourvue d'une arrivée (20) de mélange caillé-sérum (42) et d'un dispositif d'agitation (13),
- d'un couteau obturateur (22) mobile horizontalement (F1), disposé sous le fond (8) de la cuve de fromagerie (5) et percé de trous (23) en correspondance avec les ouvertures (9) du fond (8) de la cuve (5), le couteau obturateur (22) étant lié à des moyens d'actionnement (24) aptes à le déplacer entre une position de fermeture et une position d'ouverture,
- d'un conformateur fixe (25), situé sous le couteau conformateur (22), et comprenant un ensemble de tubes (26) perforés ou micro-perforés, d'axes verticaux (10), assemblés entre eux et situés en correspondance avec les ouvertures (9) du fond (8) de la cuve de fromagerie (5),
- d'un couteau obturateur inférieur (31) mobile horizontalement (F2), disposé à la base du conformateur (25) et percé de trous (32) en correspondance avec les tubes (25) du conformateur (26), le couteau obturateur inférieur (31) étant lié à des moyens d'actionnement (33) aptes à le déplacer entre une position de fermeture et une position d'ouverture,
- d'une réhausse (34) disposée sous le couteau obturateur inférieur (31) et constituée d'un ensemble de tubes (35) perforés ou micro-perforés de faible hauteur, en correspondance avec les tubes (26) du conformateur (25), la réhausse (34) étant montée mobile verticalement (F3) et liée à des moyens d'actionnement (38,39) aptes à la déplacer entre une position basse, et une position haute dans laquelle elle vient en appui sous le couteau obturateur inférieur (31), et
- sous la réhausse (34), d'une table élévatrice (40) ou d'un plateau mobile verticalement (F4), et apte à supporter un moule et/ou des moules (2) et/ou un bloc-moule (1) à fromage, la table (40) ou le plateau étant lié à des moyens d'actionnement (41) aptes à la déplacer entre une position basse, permettant la pose et l'évacuation du ou des moules (2) et/ou du bloc-moule (1), et une position haute dans laquelle le ou les moules (2) et/ou le bloc-moule (1) sont placés en appui contre la réhausse (34).

2. Mouleuse-doseuse de mélange caillé-sérum selon la revendication 1, caractérisée en ce que la cuve de fromagerie (5), placée dans sa partie supérieure, possède un dispositif d'agitation à pales d'agitation (14,15) rotatives autour d'axes verticaux (6,7).

3. Mouleuse-doseuse de mélange caillé-sérum selon la revendication 1 ou 2, caractérisée en ce que des moyens (21) d'écoulement contrôlé du sérum sont raccordés à la paroi latérale pleine (11) de la cuve de fromagerie (5).

4. Mouleuse-doseuse de mélange caillé-sérum selon la revendication 3, caractérisée en ce que les moyens d'écoulement contrôlé du sérum sont réalisés sous la forme d'un siphon (21) à hauteur réglable.

5. Mouleuse-doseuse de mélange caillé-sérum selon l'une quelconque des revendications 1 à 4, caractérisée en ce que l'arrivée (20) de mélange caillé-sérum dans la cuve de fromagerie (5) est à hauteur réglable.

6. Mouleuse-doseuse de mélange caillé-sérum selon l'une quelconque des revendications 1 à 5, caractérisée en ce que les tubes verticaux (26) du conformateur (25) sont tous montés entre une plaque horizontale supérieure (27) et une plaque horizontale inférieure (28), reliées entre elles, sur leur étendue, par des tirants (29) ou entretoises verticaux et assemblées, à leur périphérie, par un cadre-support (30) solidarisé avec le bâti général (3) de la mouleuse-doseuse.

7. Mouleuse-doseuse de mélange caillé-sérum selon l'une quelconque des revendications 1 à 6, caractérisée en ce que les tubes (35) de la réhausse (34) sont fixés sous une plaque horizontale (36), dont la périphérie est assemblée à un cadre-support (37) déplaçable verticalement au moyen de vérins à double effet (38,39), liés au bâti général (3) de la mouleuse-doseuse.

8. Mouleuse-doseuse de mélange caillé-sérum selon l'une quelconque des revendications 1 à 7, caractérisée en ce que son bâti général (3) comporte, dans sa partie supérieure, une poutre horizontale (4) qui supporte le dispositif d'agitation (13) équipant la cuve de fromagerie (5).

9. Mouleuse-doseuse de mélange caillé-sérum selon l'une quelconque des revendications 1 à 8, caractérisée en ce que la surface du fond (8) de la cuve de fromagerie (5), vue en projection horizontale, contient entièrement le ou les moules à fromage (2), et/ou le bloc-moule (1), à remplir de doses de mélange caillé-sérum.

10. Mouleuse-doseuse de mélange caillé-sérum selon la revendication 9, caractérisée en ce que, pour des moules unitaires (2) répartis suivant des rangées parallèles, la cuve de fromagerie (5) possède une section horizontale du type "double O", résultant de la zone totale couverte par deux cercles égaux et sécants.

## Patentansprüche

1. Form- und Dosiervorrichtung für ein Buche/Molke-Gemisch zur Herstellung von Käse aus Pressmasse, Halbpressmasse und Weichmasse, dadurch gekennzeichnet, daß die Vorrichtung als eine Einheit vorliegt, die von oben nach unten im wesentlichen zusammengesetzt ist aus:
- einem im oberen Teil angeordneten Käsereitrog (5) geringer Kapazität, die jedoch mindestens gleich derjenigen einer oder mehrerer Formen (2) und/oder eines Formenblocks (1) ist, die gefüllt werden sollen, wobei der Trog (5) eine massive Seitenwand (11) aufweist, der im Innern eine perforierte oder mikroperforierte vertikale Wand (12) zugeordnet ist, sowie einen Boden (8) aufweist, der von Öffnungen (9) durchsetzt ist, die mit der oder den zu füllenden Formen (2) übereinstimmen, wobei der Trog (5) auch mit einem Einlaß (20) für ein Buche/Molke-Gemisch (42) und einer Rührvorrichtung (13) ausgestattet ist;
- einem horizontal beweglichen (F1) Blockiermesser (22), das unter dem Boden (8) des Käsereitroges (5) angeordnet ist und von Löchern (23) durchsetzt ist, die mit den Öffnungen (9) des Bodens (8) des Troges (5) übereinstimmen, wobei das Blockiermesser (22) mit Betätigungsmitteln (24) verbunden ist, die es zwischen einer Schließstellung und einer Öffnungsstellung verschieben können;
- einem feststehenden Formgeber (25), der unter dem Blockier- bzw. Formgebermesser (22) angeordnet ist und eine Gruppe aus perforierten oder mikro-perforierten Rohren (26) mit vertikalen Achsen (10) aufweist, die aneinandergebaut und mit den Öffnungen (9) des Bodens (8) des Troges (5) übereinstimmend angeordnet sind;
- einem horizontal beweglichen (F2) unteren Blockiermesser (31), das an der Basis des Formgebers (25) angeordnet ist und von Löchern (32) durchsetzt ist, die mit den Rohren (25) des Formgebers (26) übereinstimmen, wobei das untere Blockiermesser (31) mit Betätigungsmitteln (33) verbunden ist, die es zwischen einer Schließstellung und einer Öffnungsstellung verschieben können;
- einem unter dem unteren Blockiermesser (31) angeordneten Heber (34), der aus einer Gruppe perforierter oder mikroperforierter Rohre (35) geringer Höhe besteht, die mit den Rohren (26) des Formgebers (25) übereinstimmen, wobei der Heber (34) vertikal beweglich (F3) gelagert ist und mit Betätigungsmitteln (38, 39) verbunden ist, die ihn zwischen einer niedrigen Stellung und einer hohen Stellung verschieben können, in der er unter dem unteren Blockiermesser (31) anstößt; und
- einem Hebetisch (40) oder einer vertikal beweglichen (F4) Plattform, der bzw. die eine Form und/oder Formen (2) und/oder einen Käse-Formenblock (1) tragen kann, wobei der Tisch (40) oder die Plattform mit Betätigungsmitteln (41) verbunden ist, die ihn bzw. sie verschieben können zwischen einer niedrigen Stellung, die das Anbringen und Entfernen der einen oder mehreren Formen (2) und/oder des Formenblocks (1) ermöglicht, und einer hohen Stellung, in der die eine oder mehreren Formen (2) und/oder der Formenblock (1) gegen den Heber (34) gedrückt werden.

2. Form- und Dosiervorrichtung für ein Buche/Molke-Gemisch nach Anspruch 1, dadurch gekennzeichnet, daß der in ihrem oberen Teil angeordnete Käsereitrog (5) eine Rührvorrichtung mit Rührblättern (14, 15) besitzt, die um vertikale Achsen (6, 7) drehbar sind.

3. Form- und Dosiervorrichtung für ein Buche/Molke-Gemisch nach Anspruch 1 oder 2, dadurch gekennzeichnet, daß Mittel (21) für den kontrollierten Abfluß der Molke an die massive Seitenwand (11) des Käsereitroges (5) angeschlossen sind.

4. Form- und Dosiervorrichtung für ein Buche/Molke-Gemisch nach Anspruch 3, dadurch gekennzeichnet, daß die Mittel für den kontrollierten Abfluß der Molke als höhenverstellbarer Siphon (21) ausgebildet sind.

5. Form- und Dosiervorrichtung für ein Buche/Molke-Gemisch nach einem der Ansprüche 1 bis 4, dadurch gekennzeichnet, daß der Einlaß (20) für das Buche/Molke-Gemisch in den Käsereitrog (5) höhenverstellbar ist.

6. Form- und Dosiervorrichtung für ein Buche/Molke-Gemisch nach einem der Ansprüche 1 bis 5, dadurch gekennzeichnet, daß die vertikalen Rohre (26) des Formgebers (25) allesamt zwischen einer oberen horizontalen Platte (27) und einer unteren horizontalen Platte (28) gelagert sind, die über ihre gesamte Ausdehnung mittels Zugstangen (29) oder vertikaler Streben miteinander verbunden sind und an ihrem Rand mittels eines mit dem Gesamtgestell (3) der Form- und Dosiervorrichtung einstückigen Stützrahmens (30) zusammengefügt sind.

7. Form- und Dosiervorrichtung für ein Buche/Molke-Gemisch nach einem der Ansprüche 1 bis 6, dadurch gekennzeichnet, daß die Rohre (35) des Hebers (34) unter einer horizontalen Platte (36) befestigt sind, deren Rand mit einem Stützrahmen (37) zusammengebaut ist, der mit Hilfe von Doppelwirkungszylindern (38, 39) vertikal verschiebbar ist, die mit dem Gesamtgestell (3) der Form- und Dosiervorrichtung verbunden sind.

8. Form- und Dosiervorrichtung für ein Buche/Molke-Gemisch nach einem der Ansprüche 1 bis 7, dadurch gekennzeichnet, daß ihr Gesamtgestell (3) in seinem oberen Teil einen Horizontalträger (4) aufweist, der die Rührvorrichtung (13) trägt, mit der der Käsereitrog (5) ausgestattet ist.

9. Form- und Dosiervorrichtung für ein Buche/Molke-Gemisch nach einem der Ansprüche 1 bis 8, dadurch gekennzeichnet, daß die Oberfläche des Bodens (8) des Käsereitroges (5) in seiner Horizontalprojektion die eine oder die mehreren Käseformen (2) und/oder den Formenblock (1), die mit Dosierungen eines Buche/Molke-Gemisches befüllt werden sollen, vollständig enthält.

10. Form- und Dosiervorrichtung für ein Buche/Molke-Gemisch nach Anspruch 9, dadurch gekennzeichnet, daß für Einheitsformen (2), die entlang paralleler Reihen verteilt sind, der Käsereitrog (5) einen horizontalen Schnitt in der Art eines "Doppel-O" besitzt, der sich aus der Gesamtfläche ergibt, die von zwei einander schneidenden gleichen Kreisen abgedeckt wird.

## Claims

1. A metering and moulding device for curds-serum mixture, for the manufacture of pressed paste cheeses, semi-pressed paste cheeses and soft paste cheeses, characterised in that it is formed as a system which is essentially composed, from top to bottom, of:
- a cheese-making vat (5) situated in the upper part, of reduced capacity but of a capacity at least equal to that of the mould or moulds (2) and/or of a mould block (1) to be filled, said vat (5) having a solid sidewall (11) backed internally by a perforated or micro-perforated vertical wall (12), and having a base (8) pierced by openings (9) corresponding to the mould or moulds (2) to be filled, said vat (5) also being provided with an inlet (20) for curds-serum mixture (42) and with an agitating device (13),
- a sealing cutter (22) which is horizontally movable (F1), which is disposed on the base (8) of the cheese-making vat (5) and which is pierced by holes (23) corresponding to the openings (9) in the base (8) of the vat (5), said sealing cutter (22) being linked to actuating means (24) suitable for displacing it between a closed position and an open position,
- a fixed forming device (25) situated below the forming cutter (22) and comprising a system of perforated or micro-perforated tubes (26) with vertical axes (10), which are fitted between each other and which are situated corresponding to the openings (9) in the base (8) of the cheese-making vat (5),
- a lower sealing cutter (31) which is horizontally movable (F2), which is disposed on the base of the forming device (25) and which is pierced by holes (32) corresponding to the tubes (26) of the forming device (25), said lower sealing cutter (31) being linked to actuating means (33) suitable for displacing it between a closed position and an open position,
- a filling arrangement (34) disposed below the lower sealing cutter (31) and consisting of a system of perforated or micro-perforated tubes (35) of shallow height corresponding to the tubes (26) of the forming device (25), said filling arrangement (34) being mounted so that it is vertically movable (F3) and being linked to actuating means (38, 39) suitable for displacing it between a low position and a high position in which it bears against the lower sealing cutter (31), and
- a lifting table (40) or a plate, which is vertically movable (F4), which is disposed below the filling arrangement (34) and which is suitable for supporting a cheese mould and/or moulds (2) and/or a mould block (1), said table (40) or plate being linked to actuating means (41) suitable for displacing it between a low position which permits the placement and emptying of the mould or moulds (2) and/or of the mould block (1), and a high position in which the mould or moulds (2) and/or the mould block (1) are placed so that they bear against the filling arrangement (34).

2. A metering and moulding device for curds-serum mixture according to claim 1. characterised in that the cheese-making vat (5) which is situated in the upper part thereof has an agitating device which comprises agitating blades (14, 15) which can rotate about vertical axes (6, 7).

3. A metering and moulding device for curds-serum mixture according to claims 1 or 2. characterised in that controlled flow means (21) for the serum are connected to the solid sidewall (11) of the cheese-making vat (5).

4. A metering and moulding device for curds-serum mixture according to claim 3, characterised in that the controlled flow means for the serum are designed in the form of a siphon (21) of adjustable height.

5. A metering and moulding device for curds-serum mixture according to any one of claims 1 to 4, characterised in that the inlet (20) for the curds-serum mixture in the cheese-making vat (5) is height-adjustable.

6. A metering and moulding device for curds-serum mixture according to any one of claims 1 to 5, characterised in that the vertical tubes (26) of the forming device (25) are all mounted between a horizontal upper plate (27) and a horizontal lower plate (28) which are connected to each other over their extent by vertical tie rods (29) or struts and which are assembled at their periphery by a supporting frame (30) which is integral with the general supporting structure (3) of the metering and moulding device.

7. A metering and moulding device for curds-serum mixture according to any one of claims 1 to 6, characterised in that the tubes (35) of the filling arrangement (34) are fixed below a horizontal plate (36), the periphery of which is fitted to a supporting frame (37) which is vertically displaceable by means of double-acting rams (38, 39) attached to the general supporting structure (3) of the metering and moulding device.

8. A metering and moulding device for curds-serum mixture according to any one of claims 1 to 7, characterised in that its general supporting structure (3) comprises a horizontal beam (4) in its upper part which supports the agitating device (13) with which the cheese-making vat (5) is equipped.

9. A metering and moulding device for curds-serum mixture according to any one of claims 1 to 8, characterised in that the surface of the base (8) of the cheese-making vat (5), as seen in horizontal projection, entirely contains the cheese mould or moulds (2) and/or the mould block (1) which are to be filled with doses of curds-serum mixture.

10. A metering and moulding device for curds-serum mixture according to claim 9, characterised in that, for unit moulds (2) distributed in parallel rows, the cheese-making vat (5) has a horizontal section of a "double O" type which results from the total area covered by two equal intersecting circles.
